# EUROPÄISCHE PATENTSCHRIFT

(11) **EP 1 726 979 B1**
(45) Veröffentlichungstag und Bekanntmachung des Hinweises auf die Patenterteilung: **12.06.2013**
(21) Anmeldenummer: 06008745.9
(22) Anmeldetag: 27.04.2006
(51) Int. Cl.: G02B 6/44, G02B 6/38

(54) **Konfektioniertes Lichtwellenleiterkabel**
Manufactured fibre optic cable
Câble à fibres optiques confectionné

(30) Priorität: 24.05.2005 DE 202005008136 U
(43) Veröffentlichungstag der Anmeldung: 29.11.2006
(73) Patentinhaber: CCS Technology, Inc., Wilmington, DE 19803 (US)
(72) Erfinder: Sullivan, Keith, 14050 Berlin (DE); Emmerich, Michael, 12487 Berlin (DE)
(74) Vertreter: Sturm, Christoph

(56) Entgegenhaltungen:
- DE-A1- 19 741 433
- US-A- 5 015 060
- US-A- 5 761 358
- US-A1- 2005 053 342

## Beschreibung

Die Erfindung betrifft ein konfektioniertes Lichtwellenleiterkabel gemäß dem Oberbegriff des Patentanspruchs 1.

Konfektionierte Lichtwellenleiterkabel verfügen über mindestens eine von einem Kabelmantel umschlossene bzw. umhüllte Lichtwellenleiterfaser, wobei die oder jede Lichtwellenleiterfaser an mindestens einem Ende des Lichtwellenleiterkabels mit einem Stecker vorkonfektioniert ist. Der Stecker verfügt über einen Anschlussbereich, über welchen der Stecker in eine korrespondierende Buchse zur Herstellung einer Steckverbindung einsteckbar ist. Aus dem Stand der Technik ist es bereits bekannt, dem Anschlussbereich des Steckers eine Steckerkappe zuzuordnen, um so den Anschlussbereich des Steckers z. B. bei Installationsarbeiten des konfektionierten Lichtwellenleiterkabels vor Beschädigungen zu schützen.

Aus der US 200510053342 A1 ist ein Lichtwellenleiterkabel mit einer einzigen Lichtwellenleiterfaser bekannt, die von einem Kabelmantel umhüllt ist. An einem Ende des Lichtwellenleiterkabels ist die Lichtwellenleiterfaser mit einem Stecker vorkonfektioniert, wobei in einem Übergangsbereich zwischen dem Stecker und dem Kabelmantel des Lichtwellenleiterkabels eine Knickschutzeinrichtung vorhanden ist. Ein Anschiussbereich des Steckers ist von einer Steckerschutzkappe abdeckbar.

Aus der US 5,761,358 A ist ein Lichtwellenleiterkabel mit zwei Lichtwellenteiterfasern bekannt, wobei die beiden Lichtwellenleiterfasern von einem gemeinsamen Kabelmantel umhüllt sind. Beide Lichtwellenleiterfasern sind mit einem gemeinsamen Stecker vorkonfektioniert, wobei ein Anschlussbereich des Steckers von einer Steckerschutzkappe abgedeckt werden kann.

Aus der US 5,015,060 A ist ein Lichtwellenleiterkabel mit den Merkmalen des Oberbegriffs des Patentanspruchs 1 bekannt.

Hinsichtlich weiteren Standes der Technik sei auf die DE 197 41 433 A1 verwiesen.

Hiervon ausgehend liegt der vorliegenden Erfindung das Problem zu Grunde, ein neuartiges Lichtwellenleiterkabel zu schaffen. Dieses Problem wird durch ein Lichtwellenleiterkabel nach Patentanspruch 1 gelöst.

Im Sinne der hier vorliegenden Erfindung wird vorgeschlagen, den Stecker eines vorkonfektionierten Lichtwellenleiterkabels bzw. die Steckerteileinheit eines teilkonfektionierten Lichtwellenleiterkabels mit einer Schutzhülle zu umschließen, und zwar nicht nur wie im Stand der Technik den Anschlussbereich des Steckers mit einer Steckerkappe, sondern vielmehr den gesamten Stecker einschließlich der Steckerkappe desselben und einschließlich einer sich an den Stecker anschließenden Knickschutzeinrichtung, und zwar allseitig. Hierdurch wird nicht nur lediglich der Anschlussbereich eines konfektionierten Lichtwellenleiterkabels beim Installieren vor Beschädigungen geschützt, sondern vielmehr der gesamte Stecker. Dies ist insbesondere dann von Vorteil, wenn ein konfektioniertes Lichtwellenleiterkabel z. B. durch Einblasen in einen Mikroduct bzw. Miniduct zu installieren ist.

Nach einer vortellhaften Weiterbildung der Erfindung weist die Schutzhülle eine Struktur bzw. Werkstoffzusammensetzung auf, die das Installieren, insbesondere das Einblasen, des vorkonfektionierten oder teilkonfektionierten Lichtwellenleiterkabels in einen Mikroduct bzw. Miniduct erleichtert.

Bevorzugte Weiterbildungen der Erfindung ergeben sich aus den Unteransprüchen und der nachfolgenden Beschreibung. Ein Ausführungsbeispiel der Erfindung wird, ohne hierauf beschränkt zu sein, anhand der Zeichnung näher erläutert. In der Zeichnung zeigt:

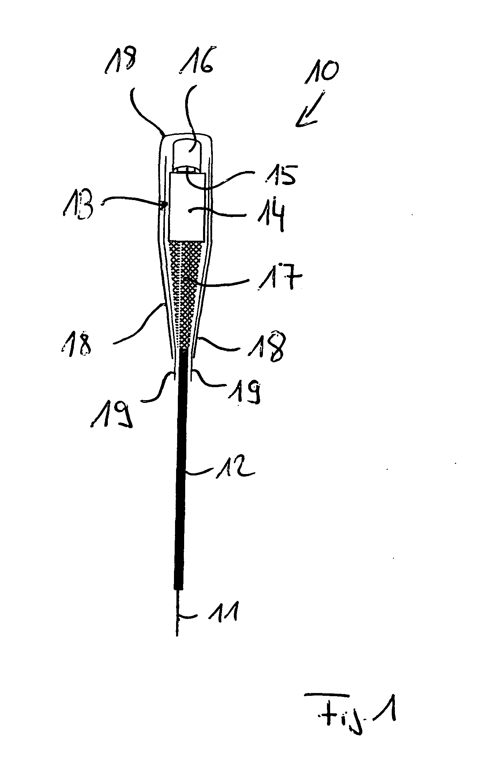

- Fig.1:: eine stark schematisierte Darstellung eines erfindungsgemäßen, konfektionierten Lichtwellenleiterkabels.

Nachfolgend wird die hier vorliegende Erfindung unter Bezugnahme auf Fig. 1 in größerem Detail beschrieben.

Fig. 1 zeigt eine stark schematisierte Darstellung eines erfindungsgemäßen Lichtwellenleiterkabels 10 mit einer einzigen Lichtwellenleiterfaser 11, die von einem Kabelmantel 12 umschlossen ist. An einem Ende ist die Lichtwellenleiterfaser 11 im gezeigten Ausführungsbeispiel mit einem Stecker 13 vorkonfektioniert, wobei der Stecker 13 ein Steckergehäuse 14, einen Anschlussbereich 15 sowie eine Steckerkappe 16 umfasst, die den Anschlussbereich 15 umschließt und denselben bei Installationsarbeiten des konfektionierten Lichtwellenleiterkabels 10 vor Beschädigungen schützt. Im Übergangsbereich zwischen Stecker 13 und Kabelmantel 12 ist eine Knickschutzeinrichtung 17 vorhanden, die auch als Knickschutztülle bezeichnet wird.

Im Sinne der hier vorliegenden Erfindung ist der gesamte Stecker 13 des vorkonfektionierten Lichtwellenleiterkabels 10 von einer Schutzhülle 18 umschlossen. Wie Fig. 1 entnommen werden kann, umgibt die Schutzhülle 18 den gesamten Stecker 13, also das Steckergehäuse 14, den Anschlussbereich 15 sowie die Steckerkappe 16. Weiterhin umhüllt im Ausführungsbeispiel der Fig. 1 die Schutzhülle 18 die Knickschutzeinrichtung 17. Wie bereits erwähnt, umschließt die Schutzhülle 18 den Stecker 13 sowie die Knickschutzeinrichtung 17 vollständig bzw. allseitig.

Durch die Schutzhülle 18 wird der gesamte Stecker 13 einschließlich der Knickschutzeinrichtung 17 beim Installieren des Lichtwellenleiterkabels 10 vor Beschädigungen geschützt. Dabei weist die Schutzhülle 18 eine Struktur bzw. Werkstoffzusammensetzung auf, die das Installieren des erfindungsgemäßen Lichtwellenleiterkabels 10 in einem Mikroduct bzw. Miniduct erleichtert. Vorzugsweise ist die Struktur bzw. Werkstoffzusammensetzung der Schutzhülle 18 derart beschaffen, dass das erfindungsgemäße Lichtwellenleiterkabel 10 in den Mikroduct erleichtert eingeblasen werden kann. Die Schutzhülle 18 verfügt hierzu an ihrer äußeren Oberfläche über einen geringen Reibwert.

Die Schutzhülle 18 ist vorzugsweise als wärmeschrumpfbare bzw. wärmerückstellbare Schutzhülle ausgebildet. In diesem Fall wird vor dem Installieren des erfindungsgemäßen Lichtwellenleiterkabels 10 in einen Mikroduct die Schutzhülle um den Stecker 13 sowie die Schutzhülle 17 positioniert und erhitzt, so dass die Schutzhülle 18 zusammenschrumpft. Hierdurch kann gewährleistet werden, dass der durch die Schutzhülle 18 benötigte Platz beim Installieren des Lichtwellenleiterkabels 10 im Mikroduct minimiert wird.

Der Schutzhülle 18 sind vorzugsweise Einrichtungen zugeordnet, die ein Entfernen der Schutzhülle 18 erleichtert. Hierdurch kann gewährleistet werden, dass nach dem Installieren des erfindungsgemäßen Lichtwellenleiterkabels 10 der Stecker 13 leicht zugänglich ist. Vorzugsweise sind in die Schutzhülle 18 Reißfäden 19 integriert, mithilfe derer die Schutzhülle 18 aufgerissen werden kann. Wie Fig. 1 zeigt, stehen freie Enden der Reißfäden 19 gegenüber der Schutzhülle 18 vor, so dass dieselben leicht ergriffen werden können. Zusätzlich oder auch als Alternative können in die Schutzhülle 18 nicht-dargestellte Perforationen integriert sein.

Im gezeigten Ausführungsbeispiel ist das erfindungsgemäße Lichtwellenleiterkabel 10 mit einem kompletten Stecker vorkonfektioniert.

Im Sinne der hier vorliegenden Erfindung ist es auch möglich, die Lichtwellenleiterfaser des erfindungsgemäßen Lichtwellenleiterkabels lediglich mit einer Steckerteileinheit zu teilkonfektionieren und die Steckerteileinheit mit der Schutzhülle zu umschließen. Bei der Steckerteileinheit handelt es sich vorzugsweise um eine Einheit, welche eine Ferrule, eine Feder und ein sogenanntes Crimpgehäuse umfasst. Diese Steckerteileinheit wird zum Schutz vor Beschädigungen beim Installieren von der Schutzhülle allseitig bzw. komplett umhüllt, wobei nach dem Installieren und dem Entfernen der Schutzhülle der Stecker komplettiert und die Steckverbindung etabliert wird.

Im Ausführungsbeispiel der Fig. 1 wurde davon ausgegangen, dass das erfinddungsgemäße Lichtwellenleiterkabel lediglich eine Lichtwellenleiterfaser umfasst. Es sei darauf hingewiesen, dass die Erfindung jedoch auch bei Lichtwellenleiterkabeln zum Einsatz kommen kann, die mehrere Lichtwellenleiterfasern umfassen. Bei solchen Lichtwellenleiterkabeln, die mehrere Lichtwellenleiterfasern umfassen, kann jede Lichtwellenleiterfaser mit einem Stecker vorkonfektioniert oder mit einer Steckerteileinheit teilkonfektioniert sein. Dabei kann einerseits jeder Lichtwellenleiterfaser ein separater Stecker bzw. eine separate Steckerteileinheit zugeordnet sein, andererseits können auch mehreren Lichtwellenleiterfasern ein gemeinsamer Stecker zugeordnet sein. Im Sinne der hier vorliegenden Erfindung sind die Stecker oder die Steckerteileinheiten dann wiederum von einer Schutzhülle umschlossen, die vorzugsweise auch die Knickschutzeinrichtungen der Schutzhüllen allseitig bzw. vollständig umschließt. Dabei können alle Stecker oder Steckerteileinheiten von einer gemeinsamen Schutzhülle umschlossen sein, andererseits kann auch jeder Stecker bzw. jede Steckerteileinheit von einer individuellen Schutzhülle umschlossen sein.

### Bezugszeichenliste

- 10: Lichtwellenleiterkabel
- 11: Lichtwellenleiterfaser
- 12: Kabelmantel
- 13: Stecker
- 14: Steckergehäuse
- 15: Anschlussbereich
- 16: Steckerkappe
- 17: Knickschutzeinrichtung
- 18: Schutzhülle
- 19: Reißfaden

## Patentansprüche

1. Lichtwellenleiterkabel, mit mindestens einer Lichtwellenleiterfaser, die von einem Kabelmantel (12) des Lichtwellenleiterkabels umhüllt ist, wobei die oder jede Lichtwellenleiterfaser an mindestens einem Ende des Lichtwellenleiterkabels mit jeweils einem Stecker (13) des Lichtwellenleiterkabels vorkonfektioniert oder mit einer Steckerteileinheit des Lichtwellenleiterkabels teilkonfektioniert ist, und wobei im Übergangsbereich zwischen dem Kabelmantel (12) und dem jeweiligen Stecker (13) oder der Steckerteileinheit Knickschutzeinrichtungen (17) vorhanden sind, die von einer Schutzhülle umschlossen sind, **dadurch gekennzeichnet, dass** zumindest der oder jeder Stecker (13) oder die oder jede Steckerteileinheit und die oder jede Knickschutzeinrichtung (17) des Lichtwellenleiterkabels von einer wärmeschrumpfbaren bzw. wärmerückstellbaren Schutzhülle (18) des Lichtwellenleiterkabels allseitig umschlossen sind, der als in die Schutzhülle (18) integrierte Reißfäden (19) oder als in die Schutzhülle (18) integrierte Perforationen ausgebildete Einrichtungen zugeordnet sind, die ein Entfernen der Schutzhülle (18) von dem Stecker (13) bzw. von der Steckerteileinheit und der Knickschutzeinrichtung (17) des Lichtwellenleiterkabels erleichtern.

2. Lichtwellenleiterkabel nach Anspruch 1, **dadurch gekennzeichnet, dass** alle Stecker oder Steckerteileinheiten von einer gemeinsamem Schutzhülle umschlossen sind.

3. Lichtwellenleiterkabel nach Anspruch 1, **dadurch gekennzeichnet, dass** alle Stecker oder Steckerteileinheiten von einer individuellen Schutzhülle umschlossen sind.

## Claims

1. Optical waveguide cable, having at least one optical waveguide fibre which is encased by a cable sheath (12) of the optical waveguide cable, wherein the or each optical waveguide fibre is prefabricated at at least one end of the optical waveguide cable with in each case one plug (13) of the optical waveguide cable or is partially fabricated with a plug sub-unit of the optical waveguide cable, and wherein kink-prevention devices (17) which are surrounded by a protective sleeve are present in the transition region between the cable sheath (12) and the respective plug (13) or the plug sub-unit, **characterized in that** at least the or each plug (13) or the or each plug sub-unit and the or each kink-prevention device (17) of the optical waveguide cable are surrounded on all sides by a protective sleeve (18) of the optical waveguide cable, which protective sleeve can shrink when exposed to heat and/or can recover its shape when exposed to heat and has associated devices which are in the form of tear threads (19), which are integrated in the protective sleeve (18), or are in the form of perforations, which are integrated in the protective sleeve (18), and make it easier to remove the protective sleeve (18) from the plug (13) or from the plug sub-unit and the kink-prevention device (17) of the optical waveguide cable.

2. Optical waveguide cable according to Claim 1, **characterized in that** all the plugs or plug sub-units are surrounded by a common protective sleeve.

3. Optical waveguide cable according to Claim 1, **characterized in that** all the plugs or plug sub-units are surrounded by an individual protective sleeve.

## Revendications

1. Câble à fibres optiques, comprenant au moins une fibre optique qui est enveloppée par une gaine de câble (12) du câble à fibres optiques, la ou chaque fibre optique étant, à au moins une extrémité du câble à fibres optiques, préfabriquée avec à chaque fois un connecteur (13) du câble à fibres optiques ou partiellement fabriquée avec une unité partielle de connecteur du câble à fibres optiques, et des dispositifs de protection contre le pliage (17) étant présents dans la zone de transition entre la gaine de câble (12) et le connecteur respectif (13) ou l'unité partielle de connecteur, lesquels dispositifs de protection contre le pliage sont entourés par une enveloppe de protection, **caractérisé en ce qu**'au moins le ou chaque connecteur (13) ou la ou chaque unité partielle de connecteur et le ou chaque dispositif de protection contre le pliage (17) du câble à fibres optiques sont entourés de tous côtés par une enveloppe de protection (18) du câble à fibres optiques qui est thermorétractable ou qui est douée d'une reprise de forme à chaud, à laquelle enveloppe de protection sont associés des dispositifs réalisés sous forme de fils de déchirement (19) intégrés dans l'enveloppe de protection (18) ou sous forme de perforations intégrées dans l'enveloppe de protection (18), lesquels dispositifs facilitent l'enlèvement de l'enveloppe de protection (18) du connecteur (13) ou de l'unité partielle de connecteur et du dispositif de protection contre le pliage (17) du câble à fibres optiques.

2. Câble à fibres optiques selon la revendication 1, **caractérisé en ce que** tous les connecteurs ou toutes les unités partielles de connecteur sont entourés par une enveloppe de protection commune.

3. Câble à fibres optiques selon la revendication 1, **caractérisé en ce que** tous les connecteurs ou toutes les unités partielles de connecteur sont entourés par une enveloppe de protection individuelle.
